# EUROPÄISCHE PATENTSCHRIFT

(11) **EP 2 249 055 B1**
(45) Veröffentlichungstag und Bekanntmachung des Hinweises auf die Patenterteilung: **11.12.2013**
(21) Anmeldenummer: 10004620.0
(22) Anmeldetag: 03.05.2010
(51) Int. Cl.: F16D 65/12

(54) **Bremsscheibe und Verfahren zu deren Herstellung**
Brake disc and method for its manufacture
Plaque de frein et procédé destiné à sa fabrication

(30) Priorität: 09.05.2009 DE 102009020622; 06.02.2010 DE 102010007082
(43) Veröffentlichungstag der Anmeldung: 10.11.2010
(73) Patentinhaber: Schwäbische Hüttenwerke Automotive GmbH, 73433 Aalen-Wasseralfingen (DE)
(72) Erfinder: Zametica, Haris, 78194 Immendingen (DE); Schmitz, Johann, 78573 Wurmlingen (DE); Hoffmann, Ingo, 78532 Tuttlingen (DE)
(74) Vertreter: Riedel, Peter

(56) Entgegenhaltungen:
- EP-A2- 1 128 083
- DE-A1-102007 061 954
- FR-A1- 2 126 083
- JP-A- 2006 052 769
- US-B1- 6 253 987

## Beschreibung

Die Erfindung betrifft eine Bremsscheibe für Scheibenbremsen der im Oberbegriff des Anspruchs 1 angegebenen Gattung.

Im Pkw-Fahrzeugbau werden bereits seit einigen Jahren zur Gewichtsreduzierung und Komfortverbesserung Bremsscheiben für Scheibenbremsen entwickelt, bei denen Reibring und Topf aus unterschiedlichen Materialen bestehen. Dies hat den Vorteil, dass der Reibring, auf dem die Reibbeläge der Scheibenbremse zur Anlage kommen, und der auf einer Achse oder einem Radträger befestigte Topf aus den für die entsprechenden Anforderungen geeigneten Materialien bestehen können. Zur Verbindung des Reibrings mit dem Topf sind unterschiedliche Anordnungen bekannt, beispielsweise genietete Bremsscheiben oder durch Umformung erzeugte formschlüssige Verbindungen, wie beispielsweise in DE 44 19 757 A1 beschrieben.

Aus der EP 1 128 083 A2 ist eine mehrteilige Bremsscheibe mit einem Topf, mit einer Reibring-anordnung und mit einem Verbindungsring bekannt. Die Reibringanordnung umfasst zwei Reibringe. Der Verbindungsring ist radial außenseitig verzahnt und in diesem Bereich in einen der beiden Reibringe unter Bildung eines Formschlusses eingegossen. Die Verbindung zwischen Topf und Reibring erfolgt mittels Reibschweißen. Der in gezeigter Weise eingegossene Verbindungsring ist thermisch sehr intensiv mit hohem Wärmeübergang an die Reibringanordnung angekoppelt, ohne dass besondere Maßnahmen zur Kühlung vorgesehen sind. Die Anordnung unterliegt im Betrieb hohen thermischen Belastungen.

Der vorliegenden Erfindung liegt die Aufgabe zugrunde, eine Bremsscheibe der im Oberbegriff des Anspruchs genannten Gattung zu schaffen, die einfach gestaltet ist und deren Reibring und Topf sicher zu verbinden sind bei thermischer Entlastung des Verbindungsrings.

Diese Aufgabe wird durch eine Bremsscheibe mit den Merkmalen des Anspruchs 1 gelöst.

Die Gestaltung der Bremsscheibe ist einfacher, und es sind keine aufwendige Umformvorgänge erforderlich. Es sind auch verschiedene Materialkombinationen durch das Reibschweißen zu verbinden, so dass hier ein großer Gestaltungsfreiraum gegeben ist.

Nach der Erfindung ist vorgesehen, dass zwischen der Reibringanordnung und dem Topf ein als separates Teil ausgebildeter Verbindungsring angeordnet ist, wobei der Verbindungsring an der Reibringanordnung befestigt ist, wobei am Topf sowie an dem Verbindungsring Verbindungsflächen ausgebildet sind, und wobei der Topf mit dem Verbindungsring an den Verbindungsflächen mittels einer durch Reibschweißung erzeugten Fügezone verbunden ist. Dabei ist der Verbindungsring vom Material der Reibringanordnung zumindest teilweise formschlüssig umschlossen und insbesondere in die Reibringanordnung eingegossen.

Die Erfindung erlaubt es, für die Reibringanordnung und für den Topf jeweils geeignete, insbesondere unterschiedliche Materialien zu wählen. So besteht die Reibringanordnung insbesondere aus Materialien wie Grauguss, Stahl, Keramik oder einem Verbundwerkstoff, während der Topf aus Aluminium oder Kunststoff bzw. Plastik bestehen kann. Der Verbindungsring besteht aus einem mit dem Material des Topfes gut verschweißbaren Material.

Durch die formschlüssige und insbesondere eingegossene Verbindung zwischen der Reibringanordnung und dem Verbindungsring kommt es hierbei auf eine Materialkompatibilität nicht an. Vielmehr können der Verbindungsring und der Topf ungeachtet der Materialauswahl für die Reibringanordnung aus gut miteinander verschweißbaren Materialien bestehen. Zwischen beiden wird eine Reibschweißung vorgenonunen, die einfach und kostengünstig herstellbar ist, und die außerdem hoch belastbar ist. Die Ausgestaltung des Verbindungsringes als separates Teil führt dazu, dass nur ein eingeschränkter Wärmeübergang von der Reibringanordnung zum Topf besteht, wobei der separate Verbindungsring zusätzliche Kühlflächen bereitstellt. Der Topf ist beim Bremsvorgang thermisch entlastet, so dass er aus leichtem und weniger wärmefestem Material hergestellt sein kann.

Der Verbindungsring weist Halteöffnungen auf, in die Haltestege der Reibringanordnung form-schlüssig eingreifen. Dabei umfasst die Reibringanordnung zwei Reibringe, die einstückig mit dazwischen befindlichen Verbindungsstegen ausgeführt sind, wobei zwischen den Verbindungsstegen und den Reibringen Kanäle zur Führung eines Luftstromes gebildet sind, und wobei die Haltestege in den Verbindungsstegen ausgebildet sind. Die in die Halteöffnungen eingreifenden Haltestege sorgen für einen zuverlässigen Formschluss zwischen der Reibringanordnung und dem Verbindungsring. Durch die Kühlkanäle wird aufgrund der Rotation der Bremsscheibe Luft gefördert, die die beim Bremsen erzeugte Wärme abführt. Die Kanäle zur Führung des Luftstromes sorgen nicht nur für eine wirksame Kühlung der Reibringanordnung beim Bremsvorgang. Vielmehr stellen sie auch einen nur eingeschränkten wärmeübertragenden Kontakt zwischen der Reibringanordnung und dem Verbindungsring her, so dass der Verbindungsring weiter thermisch entlastet ist.

Gemäß einer bevorzugten Ausgestaltung der Erfindung erstrecken sich die Verbindungsflächen und die Fügezone jeweils über einen gesamten Kreisring. Dadurch ist eine Ausrichtung im Hinblick eines Verdrehwinkels nicht erforderlich. Vorzugsweise sind die Verbindungsflächen des Topfes am freien Ende eines axialen Abschnitts gebildet. Im selben Abstand zu einer Rotationsachse ist die Verbindungsfläche der Reibringanordnung an einem Verbindungsring ausgebildet, der über einen Hals an einem inneren Umfang eines Reibrings angeformt ist. Auf diese Weise sind sowohl am Topf als auch am Verbindungsring geeignete Flächen zur Krafteinleitung für das Aneinanderdrücken der Verbindungsflächen im Reibschweißvorgang gegeben.

Gemäß einer Ausgestaltung der Erfindung sind die Verbindungsflächen radial ausgerichtet und eben. Alternativ hierzu können auch konische Verbindungsflächen vorgesehen sein, durch die sich eine Selbstzentrierung beim Herstellen der Reibschweißverbindung ergibt.

In einer vorteilhaften Ausführungsform weist der Verbindungsring einen freiliegenden radialen Außenabschnitt auf, der sich insbesondere mindestens bis in den Bereich einer radialen Außenkante der Reibringanordnung erstreckt. Hierdurch ist eine großflächige und damit hochbelastbare Verbindung zwischen der Reibringanordnung und dem Verbindungsring sichergestellt. Der freiliegende radiale Außenabschnitt stellt zusätzliche Kühlflächen zur Verfügung.

In vorteilhafter Weiterbildung weist die Reibringanordnung eine umlaufende radiale Innenkante auf, wobei sich der Verbindungsring mit einem Innenabschnitt radial innerhalb der Innenkante der Reibringanordnung erstreckt, und wobei die Verbindungsfläche am Innenabschnitt des Verbindungsrings angeordnet ist. Bei einer derartigen Ausgestaltung steht in radialer Richtung der gesamte Bereich der Reibringanordnung ausgehend von seiner Außenkante bis zur Innenkante für die Verbindung mit dem Verbindungsring zur Verfügung, wodurch die Lastübertragung zwischen beiden Bauteilen unter Vermeidung von Spannungsspitzen großflächig verteilt ist.

Alternativ kann es zweckmäßig sein, dass die Reibringanordnung eine umlaufende radiale Innenkante aufweist, dass der Verbindungsring eine umlaufende radiale Außenkante aufweist, die von der Reibringanordnung umschlossen ist, und dass sich der Verbindungsring mit einem Innenabschnitt radial innerhalb der Innenkante der Reibringanordnung erstreckt, wobei die Verbindungsfläche am Innenabschnitt des Verbindungsrings angeordnet ist. Hierdurch ist die radiale Erstreckung des Verbindungsrings minimiert, so dass dieses Bauteil klein und leichtgewichtig ausgeführt sein kann. In ihrem radialen Außenbereich ist die Reibringanordnung nicht durch den eingebetteten Verbindungsring gestört, wodurch eine hohe mechanische Integrität gegeben ist.

Ausführungsbeispiele der erfindungsgemäßen Bremsscheibe sind nachstehend anhand der Zeichnung näher erläutert. In der Zeichnung zeigt:
- Fig. 1: in einer Schnittdarstellung ein Ausführungsbeispiel der erfindungsgemäßen Bremsscheibe mit einem radial durchgehend eingebetteten Verbindungsring und einem durch Reibschweißen am Verbindungsring befestigten Topf;
- Fig. 2: eine Variante der Anordnung nach Fig. 1 mit einem Verbindungsring, dessen umlaufende radiale Außenkante von der Reibringanordnung umschlossen ist;
- Fig. 3: eine weitere Variante der Anordnung nach den Fig. 1 und 2 mit einer radial außen liegenden Fügezone zwischen dem Verbindungsring und dem Topf.

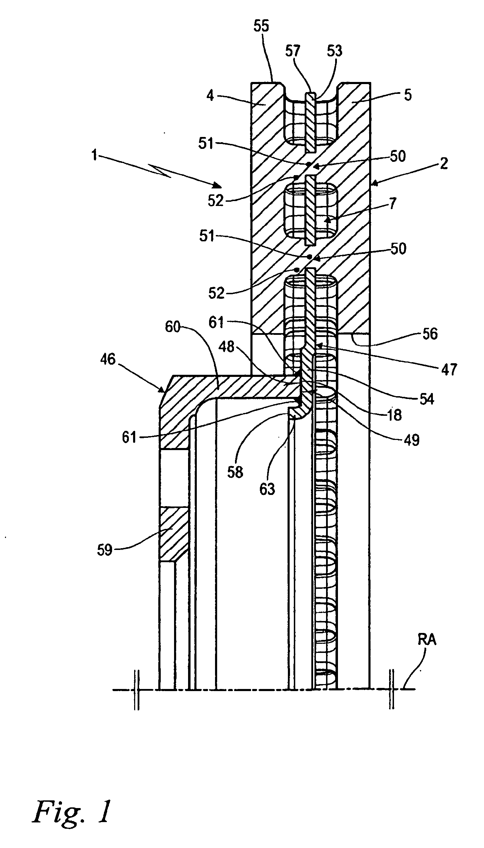

Fig. 1 zeigt in einem Radialschnitt ein Ausführungsbeispiel einer erfindungsgemäß ausgeführten Bremsscheibe für das Rad eines Kraftfahrzeuges, wobei die Bremsscheibe 1 um eine Rotationsachse RA drehbar an einer Radaufhängung gelagert ist. Der besseren Übersichtlichkeit halber ist ausgehend von der Rotationsachse RA nur eine Hälfte der Bremsscheibe 1 gezeigt. Die Bremsscheibe 1 umfasst eine Reibringanordnung 2, einen Verbindungsring 47 sowie einen Topf 46. Der Topf 46 besteht aus einem ebenen, senkrecht bzw. radial zur Rotatiorisachse RA angeordneten radialen Abschnitt 59, an dessen äußerem Umfang ein zylindrischer, koaxial zur Rotationsachse RA angeordneter axialer Abschnitt 60 angeformt ist. Der radiale Abschnitt 59 weist Bohrungen zur drehfesten Befestigung eines Rades sowie Fixiereinrichtungen zur Fixierung der Bremsscheibe 1 an der Radlagerung auf.

Die Reibringanordnung 2 umfasst im gezeigten Ausführungsbeispiel zwei Reibringe 4, 5, die einstückig mit dazwischen befindlichen Verbindungsstegen 52 ausgeführt sind. Zwischen den Verbindungsstegen 52 und den Reibringen 4, 5 erstrecken sich Kanäle 7 zur Führung eines Luftstromes, der durch eine betriebsbedingte Drehung der Bremsscheibe 1 um die Rotationsachse RA durch die Kanäle 7 hindurch hervorgerufen wird. Durch diese Luftströmung erfolgt eine innere Kühlung der Reibringanordnung 2. Die Reibringanordnung 2 wird von einem nicht dargestellten Brernssattel umschlossen, dessen Bremsbeläge beim Bremsen an die Seitenflächen der Reibringanordnung 2 angedrückt werden.

Zwischen der Reibringanordnung 2 und dem Topf 46 ist ein als separates Teil ausgebildeter Verbindungsring 47 angeordnet, der an der Reibringanordnung 2 drehfest befestigt ist. Hierzu ist der Verbindungsring 47 vom Material der Reibringanordnung 2 zumindest teilweise formschlüssig umschlossen. Die Reibringanordnung 2 kann aus Grauguss oder Stahlguss bestehen, wobei dann der Verbindungsring 47 in die Reibringanordnung 2 formschlüssig eingegossen ist. Alternativ kann die Reibringanordnung aus Keramik oder einem Verbundwerkstoff wie beispielsweise CFC bestehen. Hierbei kann dann die Einbettung des Verbindungsringes 47 in die Reibringanordnung 2 durch Sintern, Laminieren oder dergleichen erfolgen.

Zur Herstellung des Formschlusses weist der Verbindungsring 47 über seinen Umfang verteilte Halteöffnungen 50 auf, durch die Haltestege 51 der Reibringanordnung 2 formschlüssig hindurchgeführt sind. Die Haltestege 51 sind Teil der Verbindungsstege 52, im Querschnitt jedoch dünner als diese ausgebildet. Hierdurch sind um die Haltestege 51 umlaufende Stirnflächen der Verbindungsstege 52 gebildet, die seitlich an den Seitenflächen des Verbindungsringes 47 im Umfangsbereich der Halteöffnungen 50 stützend anliegen.

Abseits der Verbindungsstege 52 erstreckt sich der Verbindungsring 47 frei und ungestützt in den Kanälen 7, so dass dessen freiliegende Seitenflächen im kühlenden, durch die Kanäle 7 hindurch geführten Luftstrom liegen und dadurch gekühlt werden. In der radialen Richtung erstreckt sich der umlaufende Verbindungsring 47 von einer radial umlaufenden Außenkante 57 radial nach innen bis zu einer radial umlaufenden Innenkante 58. Auch die kreisringförmig umlaufende Reibringanordnung 2 erstreckt sich in der radialen Richtung von einer radialen umlaufenden Außenkante 55 radial nach innen zu einer radialen umlaufenden Innenkante 56. Darüber hinaus weist der Verbindungsring 47 angrenzend an seine radiale Außenkante 57 einen umlaufenden Außenabschnitt 53 und angrenzend an die radiale Innenkante 58 einen umlaufenden Innenabschnitt 54 auf. Im gezeigten Ausführungsbeispiel erstreckt sich der radiale Außenabschnitt 53 in der radialen Richtung bis zur Außenkante 53 des Verbindungsringes 47 und auch zumindest näherungsweise bis zur radialen Außenkante 55 der Reibringanordnung 2. Hierbei liegt der Außenabschnitt 53 frei, ist also zumindest teilweise nicht durch das Material der Reibringanordnung 2 gestützt und liegt damit im kühlenden, durch die Kanäle 7 geführten Luftstrom. Sinngemäß das Gleiche gilt auch für den Innenabschnitt 54 des Verbindungsrings 47, der sich radial nach innen bis zur Innenkante 58 erstreckt und dabei ebenfalls kühlend freiliegt.

Der Innenabschnitt 54 liegt bezogen auf die radiale Richtung innerhalb der Innenkante 56 der Reibringanordnung 2, und erstreckt sich mit Ausnahme seines unmittelbar an die Innenkante 58 angrenzenden Bereiches im wesentlichen eben und senkrecht zur Rotationsachse RA. Hierdurch ist an seiner dem Topf 46 zugewandten Seitenfläche eine ebene und radial ausgerichtete Verbindungsfläche 49 gebildet. Auch an der freien Stirnkante des axialen Abschnitts 60 des Topfes 46 ist eine solche ebene und radial ausgerichtete Verbindungsfläche 48 ausgebildet. Der Topf 46 ist mit dem Verbindungsring 47 an diesen Verbindungsflächen 48, 49 flächig mittels einer durch Reibschweißung erzeugten Fügezone 18 verbunden, wobei radial innenseitig und radial außenseitig der Fügezone 18 umlaufende Schweißwülste 61 ausgebildet sind. Die Verbindungsflächen 48, 49 und die Fügezone 18 erstrecken sich dabei jeweils über einen gesamten Kreisring umlaufend um die Rotationsachse RA, wobei die beiden Verbindungsflächen 48, 49 flächig und über den gesamten Kreisring verlaufend aufeinander liegen.

Die Reibschweißverbindung wird dadurch erzeugt, dass die Reibringanordnung 2 und der Topf 46 in eine Maschine eingebracht und so positioniert werden, dass die Verbindungsflächen 48, 49 sich gegenüberliegen. Dann werden die Reibringanordnung 2 und der Topf 46 relativ zueinander in eine alternierende Drehbewegung um die Rotationsachse RA versetzt und dabei an den Verbindungsflächen 48, 49 gegeneinander gedrückt, wobei die Kraftbeaufschlagung in axialer Richtung erfolgt.

Der unmittelbar an die Innenkante 58 angrenzende Bereich des Innenabschnittes 54 ist umlaufend rechtwinklig umgebogen, so dass ein parallel bzw. koaxial zur Rotationsachse RA verlaufender, zumindest näherungsweise zylindrischer Innenkranz 63 gebildet ist. Der Innenkranz 63 dient als Wasserabweiser unter feuchten Einsatzbedingungen. Der Innenabschnitt 54 kann darüber hinaus gelocht ausgeführt sein. Neben einer Gewichtsersparnis ist dadurch auch eine verbesserte Kühlung sowie Luftzirkulation erreicht.

Der Topf 46 besteht bevorzugt aus Aluminium, Stahl oder aus Kunststoff. Damit die Reibschweißung an der Fügezone 18 ausgeführt werden kann, besteht der Verbindungsring 47 aus einem mit dem Material des Topfes 46 verschweißbaren Material, wozu ebenfalls ein Leichtmetall wie Aluminium oder dergleichen in Betracht kommen kann. Trotz des nicht schweißfähigen Materials der Reibringanordnung 2 kann durch die Reibschweißung zwischen dem Verbindungsring 47 und dem Topf 46 an der Fügezone 18 eine Schweißverbindung hergestellt werden.

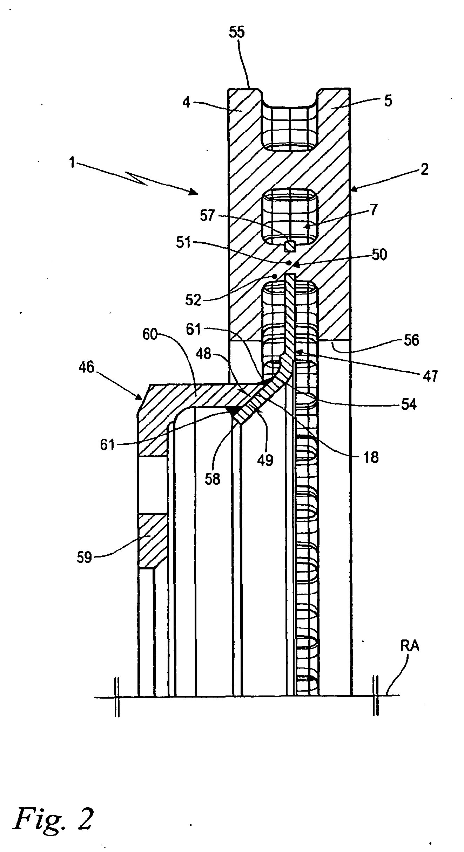

Fig. 2 zeigt eine Variante der Anordnung nach Fig. 1, bei der die Außenkante 57 des Verbindungsringes 47 im Vergleich zum Ausführungsbeispiel nach Fig. 1 radial weiter innen liegt, sich also nicht bis zur radialen Außenkante S5 der Reibringanordnung 2 erstreckt, und deshalb von der Reibringanordnung 2 umschlossen ist. Im gezeigten Ausführungsbeispiel liegt die Außenkante 57 dennoch zumindest teilweise frei in den Kanälen 7, kann aber auch vollständig eingegossen oder in anderer Weise vollständig in das Material der Reibringanordnung 2 eingebettet sein. Der an die Innenkante 58 angrenzende Bereich des Innenabschnitts 54 ist konisch zur Rotationsachse RA ausgeformt. Hierdurch ist an seiner dem Topf 46 zugewandten Seitenfläche eine konische Verbindungsfläche 49 gebildet. Auch an der freien Stirnkante des axialen Abschnitts 60 des Topfes 46 ist eine solche konische Verbindungsfläche 48 ausgebildet. In den übrigen Merkmalen und Bezugszeichen stimmt die Ausführung nach Fig. 2 mit denjenigen nach Fig. 1 überein.

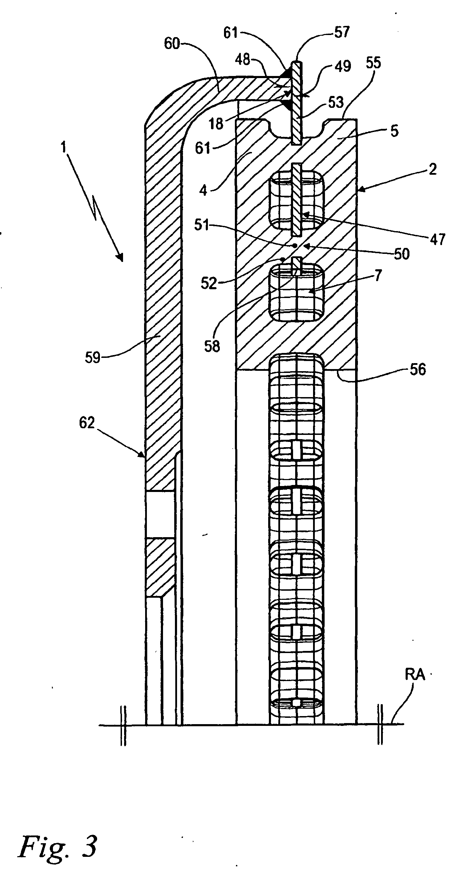

Fig. 3 zeigt eine weitere Variante der Erfindung, wobei abweichend von den Ausführungsbeispielen nach den Fig. 1 und 2 die radiale Innenkante 58 des Verbindungsringes 47 radial außerhalb der Innenkante 56 der Reibringanordnung 2 liegt, womit die Innenkante 58 des Verbindungsringes 47 von der Reibringanordnung 2 umschlossen ist. Hierzu gilt sinngemäß das Gleiche wie für die radiale Außenkante 57 des Verbindungsringes 47 nach Fig. 2.

In Übereinstimmung mit dem Ausführungsbeispiel nach Fig. 1 erstreckt sich der radiale Außenabschnitt 53 des Verbindungsrings 47 mindestens in den Bereich der radialen Außenkante 55 der Reibringanordnung 2, steht hier jedoch in der radialen Richtung weiter darüber hervor. An diesem in der radialen Richtung über die Reibringanordnung 2 hervorstehenden Außenabschnitt 53 ist auf seiner dem Topf 62 zugewandten Seitenfläche die Verbindungsfläche 49 ausgebildet, auf der der Topf 62 mit seiner zugeordneten Verbindungsfläche 48 unter Bildung einer Fügezone 18 durch Reibschweißen flächig aufgeschweißt ist. Auch hier laufen die Verbindungsflächen 48, 49 und die Fügezone 18 jeweils über einen gesamten Kreisring um die Rotationsachse RA herum, sind jedoch abweichend vom Ausführungsbeispiel nach Fig. 2 und in Übereinstimmung mit Fig. 1 radial ausgerichtet und eben. Natürlich kann auch bei den Ausführungen nach den Fig. 1 und 3 eine konische Ausgestaltung zweckmäßig sein, ebenso wie beim Ausführungsbeispiel nach Fig. 2 eine ebene Ausgestaltung vorgesehen sein kann.

Sofern nicht anders angegeben oder zeichnerisch dargestellt, stimmt das Ausführungsbeispiel nach Fig. 3 in seinen übrigen Merkmalen und Bezugszeichen mit denjenigen nach den Fig. 1 bis 2 überein.

## Patentansprüche

1. Bremsscheibe (1) für Scheibenbremsen, insbesondere in Kraftfahrzeugen, bestehend aus einer zwei Reibringe (4, 5) umfassenden Reibringanordnung (2) und einem koaxial dazu angeordneten und mit dieser verbundenen Topf (46, 62), wobei die Reibringe (4, 5) einstückig mit dazwischen befindlichen Verbindungsstegen (52) ausgeführt sind, wobei zwischen den Verbindungsstegen (52) und den Reibringen (4, 5) Kanäle (7) zur Führung eines Luftstromes gebildet sind, wobei zwischen der Reibringanordnung (2) und dem Topf (46, 62) ein als separates Teil ausgebildeter Verbindungsring (47) angeordnet ist, wobei der Verbindungsring (47) an der Reibringanordnung (2) befestigt ist, wobei am Topf (46, 62) sowie an dem Verbindungsring (47) Verbindungsflächen (48, 49) ausgebildet sind, und wobei der Topf (46, 62) mit dem Verbindungsring (47) an den Verbindungs-flächen (48, 49) mittels einer durch Reibschweißung erzeugten Fügezone (18) verbunden ist, **dadurch gekennzeichnet, dass** der Verbindungsring (47) Halteöffnungen (50) aufweist, und dass der Verbindungsring (47) vom Material der Reibringanordnung (2) zumindest teilweise derart formschlüssig umschlossen ist, dass Haltestege (51) der Reibringanordnung (2) in die Halteöffnungen (50) formschlüssig eingreifen, und wobei die Haltestege (51) in den Verbindungsstegen (52) ausgebildet sind, und wobei sich der Verbindungsring (47) abseits der Verbindungsstege (52) in den Kanälen (7) erstreckt, so dass dessen freiliegende Seitenflächen im kühlenden, durch die Kanäle (7) hindurch geführten Luftstrom liegen.

2. Bremsscheibe nach Anspruch 1,
**dadurch gekennzeichnet, dass** sich die Verbindungsflächen (48, 49) und die Fügezone (9) jeweils über einen gesamten Kreisring erstrecken.

3. Bremsscheibe nach Anspruch 1 oder 2,
**dadurch gekennzeichnet, dass** die Verbindungsfläche (48) am freien Ende eines axialen Abschnitts (60) des Topfes (46, 62) gebildet ist.

4. Bremsscheibe nach einem der Ansprüche 1 bis 3,
**dadurch gekennzeichnet, dass** die Verbindungsflächen (48, 49) radial ausgerichtet und eben sind.

5. Bremsscheibe nach einem der Ansprüche 1 bis 4,
**dadurch gekennzeichnet, dass** die Verbindungsflächen (48, 49) konisch ausgebildet sind.

6. Bremsscheibe einem der Ansprüche 1 bis 5,
**dadurch gekennzeichnet, dass** der Verbindungsring (47) in die Reibringanordnung eingegossen ist.

7. Bremsscheibe nach einem der Ansprüche 1 bis 6,
**dadurch gekennzeichnet, dass** die Reibringanordnung (2) eine umlaufende radiale Innenkante (56) aufweist, und dass sich der Verbindungsring (47) mit einem Innenabschnitt (54) radial innerhalb der Innenkante (56) der Reibringanordnung (2) erstreckt, wobei die Verbinddungsfläche (49) am Innenabschnitt (54) des Verbindungsrings (47) angeordnet ist.

8. Bremsscheibe nach einem der Ansprüche 1 bis 6,
**dadurch gekennzeichnet, dass** sich der Verbindungsring (47) mit seinem Außenabschnitt (53) radial außerhalb der Außenkante (55) der Reibringanordnung (2) erstreckt, wobei die Verbindungsfläche (49) am Außenabschnitt (53) des Verbindungsrings (47) angeordnet ist.

9. Bremsscheibe nach einem der Ansprüche 1 bis 6,
**dadurch gekennzeichnet, dass** die Reibringanordnung (2) eine umlaufende radiale Innenkante (56) aufweist, dass der Verbindungsring (47) eine umlaufende radiale Außenkante (57) aufweist, die von der Reibringanordnung (2) umschlossen ist, und dass sich der Verbindungsring (47) mit einem Innenabschnitt (54) radial innerhalb der Innenkante (56) der Reibringanordnung (2) erstreckt, wobei die Verbindungsfläche (49) am Innenabschnitt (54) des Verbindungsrings (47) angeordnet ist.

## Claims

1. Brake disc (1) for disc brakes, in particular for motor vehicles, consisting of a friction ring arrangement (2), comprising two friction rings (4, 5), and a bowl-shaped chamber (46, 62) arranged coaxially therewith and connected thereto, the friction rings (4, 5) being integrally designed with intermediately lying connecting webs (52), wherein channels (7) for guiding an air flow are formed between the connecting webs (52) and the friction rings (4, 5), wherein a connecting ring (47) formed as a separate part is arranged between the friction ring arrangement (2) and the bowl-shaped chamber (46, 62), wherein the connecting ring (47) is fixed to the friction ring arrangement (2), wherein connecting surfaces (48, 49) are formed on the bowl-shaped chamber (46, 62) and on the connecting ring (47), and wherein the bowl-shaped chamber (46, 62) is connected to the connecting ring (47) on the connecting surfaces (48, 49) by means of a joint zone (18) produced by friction welding, **characterised in that** the connecting ring (47) has holding openings (50) and the connecting ring (47) is surrounded by the material of the friction ring arrangement (2) at least in part in a positively locking manner such that the holding webs (51) of the friction ring arrangement (2) engage in a positively locking manner in the holding openings (50) and wherein the holding webs (51) are formed in the connecting webs (52) and wherein the connecting ring (47) extends off the connecting webs (52) in the channels (7) so that its exposed side surfaces lie in the cooling air flow conveyed through the channels (7).

2. Brake disc according to claim 1,
**characterised in that** the connecting surfaces (48, 49) and the joint zone (9) respectively extend over a whole circular ring.

3. Brake disc according to claim 1 or 2,
**characterised in that** the connecting surface (48) is formed at the free end of an axial portion (60) of the bowl-shaped chamber (46, 62).

4. Brake disc according to one of the claims 1 to 3,
**characterised in that** the connecting surfaces (48, 49) are radially orientated and planar.

5. Brake disc according to one of the claims 1 to 4,
**characterised in that** the connecting surfaces (48, 49) are conically formed.

6. Brake disc according to one of the claims 1 to 5,
**characterised in that** the connecting ring (47) is cast into the friction ring arrangement.

7. Brake disc according to one of the claims 1 to 6,
**characterised in that** the friction ring arrangement (2) has a surrounding radial inner edge (56) and the connecting ring (47) with an inner portion (54) extends radially within the inner edge (56) of the friction ring arrangement (2), the connecting surface (49) being arranged on the inner portion (54) of the connecting ring (47).

8. Brake disc according to one of the claims 1 to 6,
**characterised in that** the connecting ring (47) extends with its outer portion (53) radially outside of the outer edge (55) of the friction ring arrangement (2), wherein the connecting surface (49) is arranged on the outer portion (53) of the connecting ring (47).

9. Brake disc according to one of the claims 1 to 6,
**characterised in that** the friction ring arrangement (2) has a surrounding radial inner edge (56), the connecting ring has a surrounding radial outer edge (57), which is surrounded by the friction ring arrangement (2), and the connecting ring (47) with an inner portion (54) extends radially inside the inner edge (56) of the friction ring arrangement (2), wherein the connecting surface (49) is arranged on the inner portion (54) of the connecting ring (47).

## Revendications

1. Disque de frein (1) pour des freins à disque, en particulier dans des véhicules automobiles, composé d'un dispositif à anneaux de friction (2) qui comprend deux anneaux de friction (4, 5), et d'un pot (46, 62) qui est disposé coaxialement par rapport au dispositif (2) et qui est relié à celui-ci, étant précisé que les anneaux de friction (4, 5) sont réalisés d'une seule pièce avec des branches de liaison (52) situées entre eux, que des conduits (7) sont formés entre les branches de liaison (52) et les anneaux de friction (4, 5) pour guider un courant d'air, qu'il est prévu entre le dispositif à anneaux de friction (2) et le pot (46, 62) un anneau de liaison (47) conçu comme une pièce séparée, que l'anneau de liaison (47) est fixé au dispositif à anneaux de friction (2), qu'il est prévu sur le pot (46, 62) et sur l'anneau de liaison (47) des surfaces de liaison (48, 49), et que le pot (46, 62) est relié à l'anneau de liaison (47) au niveau des surfaces de liaison (48, 49) à l'aide d'une zone d'assemblage (18) produite par soudage par friction,
**caractérisé en ce que** l'anneau de liaison (47) présente des ouvertures de fixation (50) et **en ce que** l'anneau de liaison (47) est entouré au moins en partie par le matériau du dispositif à anneaux de friction (2) par complémentarité de forme de telle sorte que les branches de fixation (51) du dispositif à anneaux de friction (2) pénètrent par complémentarité de forme dans les ouvertures de fixation (50), et étant précisé que les branches de fixation (51) sont formées dans les branches de liaison (52), et que l'anneau de liaison (47) s'étend dans les conduits (7) à l'écart des branches de liaison (52) de sorte que ses surfaces latérales dégagées se trouvent dans le courant d'air de refroidissement qui traverse les conduits (7).

2. Disque de frein selon la revendication 1,
**caractérisé en ce que** les surfaces de liaison (48, 49) et la zone d'assemblage (9) s'étendent chacune sur un anneau de cercle entier.

3. Disque de frein selon la revendication 1 ou 2,
**caractérisé en ce que** la surface de liaison (48) est formée sur l'extrémité libre d'une section axiale (60) du pot (46, 62).

4. Disque de frein selon l'une des revendications 1 à 3,
**caractérisé en ce que** les surfaces de liaison (48, 49) sont orientées radialement et sont planes.

5. Disque de frein selon l'une des revendications 1 à 4,
**caractérisé en ce que** les surfaces de liaison (48, 49) sont coniques.

6. Disque de frein selon l'une des revendications 1 à 5,
**caractérisé en ce que** l'anneau de liaison (47) est coulé dans le dispositif à anneaux de friction.

7. Disque de frein selon l'une des revendications 1 à 6,
**caractérisé en ce que** le dispositif à anneaux de friction (2) présente un bord intérieur radial circulaire (56) et **en ce que** l'anneau de liaison (47) s'étend avec une section intérieure (54) radialement à l'intérieur du bord intérieur (56) du dispositif à anneaux de friction (2), étant précisé que la surface de liaison (49) est disposée sur la section intérieure (54) de l'anneau de liaison (47).

8. Disque de frein selon l'une des revendications 1 à 6,
**caractérisé en ce que** l'anneau de liaison (47) s'étend avec sa section extérieure (53) radialement à l'extérieur du bord extérieur (55) du dispositif à anneaux de friction (2), étant précisé que la surface de liaison (49) est disposée sur la section extérieure (53) de l'anneau de liaison (47).

9. Disque de frein selon l'une des revendications 1 à 6,
**caractérisé en ce que** le dispositif à anneaux de friction (2) présente un bord intérieur radial circulaire (56), **en ce que** l'anneau de liaison (47) présente un bord extérieur radial circulaire (57) qui est entouré par le dispositif à anneaux de friction (2), et **en ce que** l'anneau de liaison (47) s'étend avec une section intérieure (54) radialement à l'intérieur du bord intérieur (56) du dispositif à anneaux de friction (2), étant précisé que la surface de liaison (49) est disposée sur la section intérieure (54) de l'anneau de liaison (47).
